# EUROPEAN PATENT SPECIFICATION

(11) **EP 2 679 459 B1**
(45) Date of publication and mention of the grant of the patent: **03.10.2018**
(21) Application number: 13173584.7
(22) Date of filing: 25.06.2013
(51) Int. Cl.: B60W 10/00, H02P 9/00, B60L 11/08, B60L 11/18, H02P 1/26, H02J 7/14

(54) **Railway vehicle traction system**
Schienenfahrzeugantriebssystem
Système de traction d'un véhicule ferroviaire

(30) Priority: 28.06.2012 JP 2012144910
(43) Date of publication of application: 01.01.2014
(73) Proprietor: Hitachi, Ltd., Tokyo 100-8280 (JP)
(72) Inventor: Inarida, Satoru, Chiyoda-ku, Tokyo 100-8220 (JP); Mochizuki, Kento, Chiyoda-ku, Tokyo 100-8220 (JP); Shimada, Motomi, Chiyoda-ku, Tokyo 100-8220 (JP)
(74) Representative: Gill, Stephen Charles

(56) References cited:
- EP-A2- 1 531 078
- EP-A2- 2 368 744
- CA-A1- 2 806 817
- US-A1- 2011 273 009

## Description

### BACKGROUND OF THE INVENTION

### 1. Field of the Invention

The present invention relates to a railway vehicle traction system that uses, as a power source, an induction generator that is driven by an engine.

### 2. Description of the Related Art

For a railway vehicle that travels on non-electrified lines, a railway vehicle traction system is generally used which generates alternating-current power by causing an internal-combustion engine such as a diesel engine to drive a power generator, causes a rectifier or a power converter to convert the alternating-current power into direct-current power, and causes a power inverter to drive an alternating-current motor. As power generators, a separately-excited alternator (synchronous generator) is widely used while recently a permanent magnet generator is used in many cases. The separately-excited alternator can generate voltage by rotating. The permanent magnet generator is advantageous since the associated electric motor is reduced in size and weight and achieves higher efficiency.

For example, JP-2008-49811-A discloses a hybrid traction system that has an engine, an induction generator, a power converter for converting an alternating current output from the induction generator into a direct current, a power inverter for converting the direct current into an alternating current to be used to drive a railway vehicle, and a storage battery device connected to a direct-current power unit of a main circuit and can effectively use regenerative electric power for braking. In addition, JP-2008-49811-A discloses that the engine is started by driving the induction generator as an electric motor using power stored in the storage battery device connected to the direct-current power unit of the main circuit.

In addition, the induction generator is smaller and more inexpensive than synchronous motors and has a simpler structure than synchronous motors. The induction generator does not need a contactor such as a slip ring, and thus has an advantage that its reliability is higher.

CA A 2806817 proposes an electric vehicle propulsion control device and railway vehicle system. US 2011/273009 proposes power distribution systems for powered rail vehicles. EP A 1531078 proposes a control system and control method for a motor powered four wheel drive vehicle. EP A 2368744 proposes a traction system for a trainset.

### SUMMARY OF THE INVENTION

A typical traction system does not have a storage battery device for a direct-current power unit of a main circuit; therefore such a traction system cannot acquire exciting energy necessary upon activation of an induction generator, unlike the hybrid traction system described in JP-2008-49811-A. As a result, the typical traction system must use a synchronous generator. Thus, there is a problem that the typical traction system cannot use a small, inexpensive, and highly reliable induction generator as a power generator.

An object of the invention is to allow even a traction system, which does not have a storage battery device for a direct-current power unit of the traction system, to use an induction generator as a power generator.

In order to address the aforementioned problems, according to the invention, a railway vehicle traction system according to claim 1 is provided.

In the traction system that uses, as a power source, the induction generator mechanically coupled with the engine but does not include a large-capacity storage battery device that is used for a hybrid traction system or the like, the induction generator can be used as a power generator. Thus, the traction system that is small, inexpensive and highly reliable can be provided.

### BRIEF DESCRIPTION OF THE DRAWINGS

Other objects and advantages of the invention will become apparent from the following description of embodiments with reference to the accompanying drawings in which:
Fig. 1 is a diagram illustrating a configuration according to a first embodiment of the invention;
Fig. 2 is a diagram illustrating operations according to the first embodiment of the invention;
Fig. 3 is a diagram illustrating a configuration according to a second embodiment of the invention; and
Fig. 4 is a diagram illustrating a configuration according to a third embodiment of the invention.

### DESCRIPTION OF THE PREFERRED EMBODIMENTS

A railway vehicle has a low-voltage storage battery for supplying power to on-vehicle control devices. For example, a voltage of 24V, 72V, 100V, or 110V is often used for such on-vehicle control devices. An amount of voltage is stored in a direct-current power unit of a main circuit by supplying the power from the storage battery to the direct-current power unit, and an induction generator is activated by the voltage. In this case, the power sufficient to drive the induction generator in consideration of a loss of a power converter is supplied to the direct-current power unit of the main circuit. After completion of the supply of the power to the direct-current power unit of the main circuit, the storage battery is separated from the direct-current power unit of the main circuit by opening a contactor. Thus, after the induction generator starts generating power, insulation is ensured between the main circuit whose direct-current power unit is subject to voltages as high as several thousand volts and a power supply circuit provided with the storage battery for supplying a relatively low voltage of several ten volts to one hundred volts to the on-vehicle control devices.

After the activation of the induction generator, the power supplied from the induction generator enables the voltage of the direct-current power unit of the main circuit to be maintained and enables power to be supplied to an electric motor for driving the railway vehicle through a power inverter.

Therefore, a railway vehicle traction system including the induction generator that is small, inexpensive, and highly reliable and used as a power generator can be provided in a manner that is simple in circuit configuration.

Hereinafter, embodiments of the invention are described with reference to the accompanying drawings.

### First Embodiment

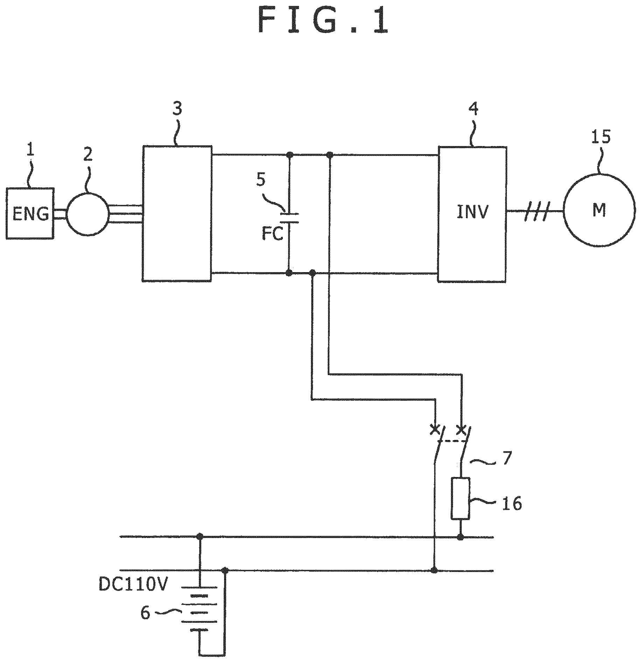

Fig. 1 is a diagram illustrating a railway vehicle traction system according to the first embodiment of the invention.

The railway vehicle traction system illustrated in Fig. 1 includes an engine 1, an induction generator (IG) 2, a power converter 3, a power inverter 4, a smoothing capacitor (FC) 5, and an electric motor 15. The induction generator 2 is driven by the engine 1. The power converter 3 converts alternating-current power output from the induction generator 2 into direct-current power. The smoothing capacitor 5 (FC) smoothes the direct-current power output from the power converter 3. The power inverter 4 converts, into alternating-current power, the direct-current power output from the smoothing capacitor 5 serving as a direct-current voltage supply source. The electric motor 15 is driven by the power inverter 4. In the railway vehicle traction system, a direct-current power unit of a main circuit is arranged between the power converter 3 and the power inverter 4 and connected through a contactor 7 and a current reducing element 16 to a low-voltage storage voltage 6 (of 110 V in this example) for supplying power to an on-vehicle control device, and power can be supplied from the low-voltage storage battery 6 to the smoothing capacitor 5. The current-reducing element 16 is a resistor or the like. The on-vehicle control device includes at least any of a control circuit for the power converter 3 and power inverter 4, an on-vehicle signal device such as an on-vehicle automatic train control (ATC) device, a driver's board, a central control unit for communicating with devices within the traction system, and a brake control device.

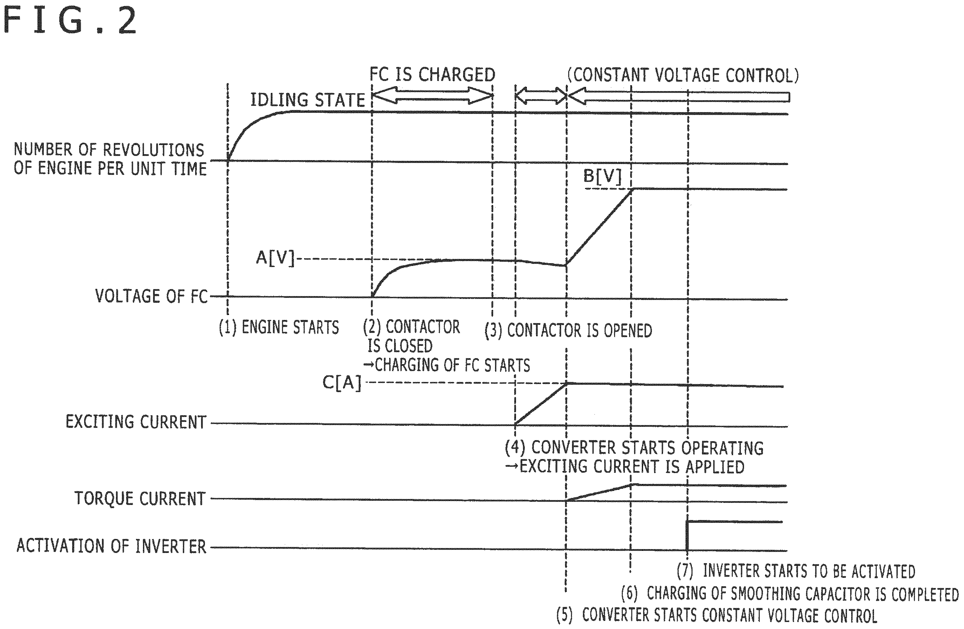

Next, operations of the railway vehicle traction system illustrated in Fig. 1 are described with reference to Fig. 2. In Fig. 2, the abscissa indicates time and the operations are illustrated with respect to the number of revolutions of the engine per unit time, a voltage of the filter capacitor (FC), an exciting current of the induction generator, a torque current of the induction generator, and an activation state of the power inverter.
(1) The engine 1 starts, and the number of revolutions of the engine 1 per unit time is gradually stabilized.
(2) When the number of revolutions of the engine 1 per unit time is stabilized, the contactor 7 is closed and the smoothing capacitor 5 is charged by the storage battery 6 through the current-reducing element 16.
(3) When the voltage of the smoothing capacitor 5 reaches or becomes higher than a voltage sufficient to excite the induction generator, or when energy stored in the smoothing capacitor 5 reaches or becomes higher than power necessary to generate an exciting current Id and a torque current Iq that are necessary for the induction generator 2 to start to generate power through the power converter 3, the contactor 7 is opened and insulation between the main circuit and a control power source is ensured.
(4) The power converter 3 converts the voltage of the smoothing capacitor 5 into an alternating current and causes the exciting current Id to flow in the induction generator 2.
(5) The power converter 3 causes the torque current Iq to rise and starts constant voltage control. As a result, the induction generator 2 starts an operation of generating power. After that, the voltage of the smoothing capacitor 5 is increased to a predetermined voltage (B[V]) by the power generated by the induction generator 2.
(6) When the voltage of the smoothing capacitor 5 is increased to the predetermined voltage (B[V]), the torque current Iq is maintained at a certain level by the constant voltage control of the power converter 3, and the voltage of the smoothing capacitor 5 is maintained at the voltage (B[V]).
(7) The power inverter 4 is activated.

Fig. 2 explains (1) the start of the engine and (2) the start of charging of the smoothing capacitor 5 by the storage battery 6, in that sequence, that is (1) to (2). However, the starts (1) and (2) can be simultaneous or reverse, that is (2) to (1). In any of these cases, power generation can be started with no problem.

In addition, (5) the rise of the torque current Iq and (4) the rise of the exciting current Id can be simultaneous. Also, (5) the rise of the torque current Iq can be at the time when the exciting current Id starts to flow after (4) the rise of the exciting current Id, or at the time when the exciting current Id rises to a value C[A] and is stabilized at the value C[A]. Further, (7) the activation of the power inverter 4 can be performed between the rises (5) and (6) with no problem.

A power-supply voltage of approximately 100V is used for the on-vehicle control device, whereas the voltage of the main circuit is higher than the power-supply voltage of the on-vehicle control device. When a high voltage is applied to a power supply of the control device, the control device may be adversely affected. Thus, it is preferable that (3) the opening of the contactor 7 be performed at least before (5) the induction generator 2 starts the operation of generating power.

According to the first embodiment, the railway vehicle traction system including the induction generator that is small, inexpensive, and highly reliable can be provided with a simple circuit configuration.

### Second Embodiment

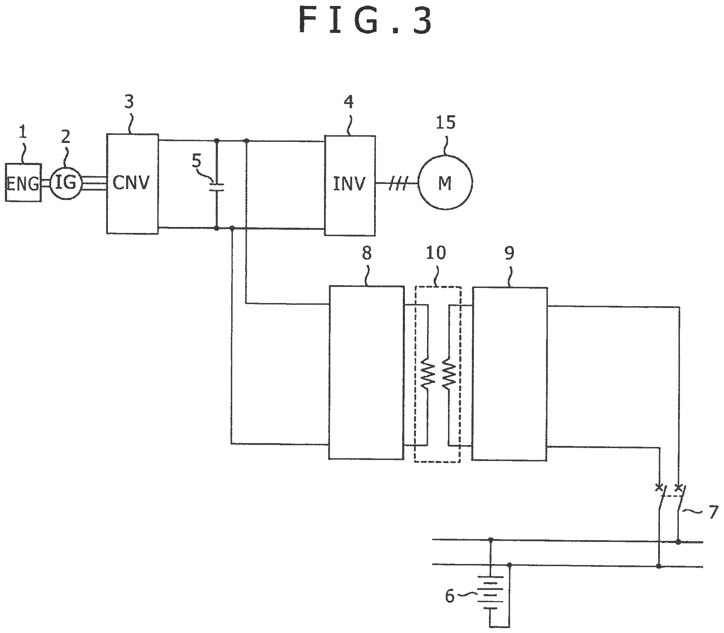

Fig. 3 is a diagram illustrating a railway vehicle traction system according to the second embodiment of the invention. The railway vehicle traction system according to the second embodiment includes a second power inverter 9, a transformer 10, and a rectifier 8. The second power inverter 9 is arranged between the direct-current power unit of the main circuit and the contactor 7 and converts a direct-current voltage of the storage battery 6 into an alternating current. The transformer 10 transforms an alternating-current voltage output from the second power inverter 9. The rectifier 8 converts a secondary voltage of the transformer 10 into a direct current. The smoothing capacitor 5 is charged by the storage battery 6 through the second power inverter 9, the transformer 10, and the rectifier 8. Other parts are the same as the traction system illustrated in Fig. 1 and constituent elements that have the same functions as those of the traction system illustrated in Fig. 1 are indicated by the same reference numerals and symbols. Regarding the operations to be executed for the start of the induction generator 2, the operation of charging the smoothing capacitor 5 by the storage battery 6 through the current-reducing element 16 is replaced with an operating of charging the smoothing capacitor 5 by the storage battery 6 through the second power inverter 9, the transformer 10, and the rectifier 8. Other operations and configurations are the same as the first embodiment.

In the second embodiment illustrated in Fig. 3, since the smoothing capacitor 5 is charged by the storage battery 6 through the transformer 10, the storage battery 6 can be insulated from the main circuit during the charging of the smoothing capacitor 5. Specifically, there is an advantage that even if the contactor 7 fails due to a short circuit, it is possible to prevent a high voltage of the main circuit from being applied to the control power source and therefore prevent the control device from being adversely affected.

In addition, by setting the ratio of the number of turns of a coil on a secondary side (side of the main circuit) to the number of turns of a coil on a primary side (side of the storage battery 6) in the transformer 10 to 1 or larger, the smoothing capacitor 5 can be charged to a higher voltage than the voltage of the storage battery 6. Thus, the induction generator 2 can be stably activated. Since energy stored in the smoothing capacitor 5 is C × V²/2 (C is capacitance of the smoothing capacitor 5, and V is the charged voltage), the charged voltage V is equal to or lower than the voltage of the storage battery 6. In order to activate the induction generator 2, it is necessary that the capacitance C of the smoothing capacitor 5 be sufficiently large in the first embodiment illustrated in Fig. 1. In the second embodiment illustrated in Fig. 3, on the other hand, the charged voltage V of the smoothing capacitor 5 can be freely set. Thus, even if the capacitance C of the smoothing capacitor 5 is small, energy that is sufficient to activate the induction generator 2 can be stored in the smoothing capacitor 5.

In the circuit of the second embodiment illustrated in Fig. 2, the higher the ratio of the numbers of turns of the coils in the transformer 10, the higher energy can be stored in the smoothing capacitor 5. When the smoothing capacitor 5 is charged so that the energy stored in the smoothing capacitor 5 is equal to or higher than the sum of energy necessary to activate the engine 1 and energy necessary to activate the induction generator 2, the induction generator 2 can be driven by the smoothing capacitor 5 during stop of the engine 1, and the engine can be activated. As a result, a starter motor for activating the engine 1 is not required. Thus, the system can be simplified, and the traction system that is reliable can be provided.

### Third Embodiment

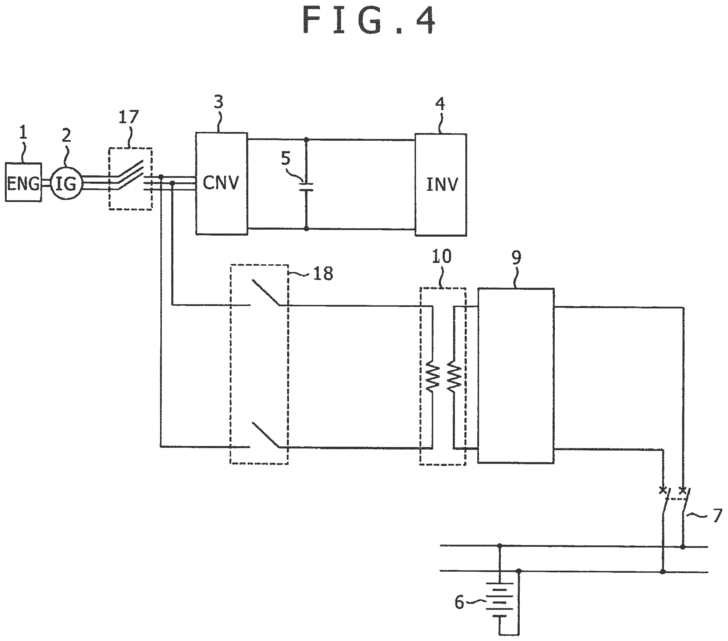

Fig. 4 is a diagram illustrating a railway vehicle traction system according to the third embodiment of the invention.

In the traction system illustrated in Fig. 4, an output of the transformer 10 is connected to an alternating-current input end of the power converter 3. The power converter 3 has a rectifying function that rectifies the output of the transformer 10 and achieves the charging of the smoothing capacitor 5. Thus, the rectifier 8 that is required in the second embodiment illustrated in Fig. 3 can be omitted.

During the charging of the smoothing capacitor 5 by the storage battery 6, a contactor 17 is open and a contactor 18 is closed. During a time period other than the charging, the contactor 17 is closed and the contactor 18 is open. The sequence of the charging is the same as the second embodiment illustrated in Fig. 3 except for the operations of the contactors 17 and 18. According to the third embodiment, since the rectifier 8 can be omitted, the traction system can be provided, which is smaller, lighter, and more reliable than the second embodiment illustrated in Fig. 2.

## Claims

1. A railway vehicle traction system comprising:
an engine (1);
a generator (2) configured to be driven by the engine;
a first power converter (3) configured to convert alternating-current power output from the generator into direct-current power;
a smoothing capacitor (5) configured to smooth the direct-current power output from the first power converter;
a second power converter (4) configured to convert the direct-current power output from the smoothing capacitor serving as a direct-current voltage source into alternating-current power;
storage battery means (6) for supplying power to an on-vehicle control device; and
a contactor (7) that is connected between the storage battery means and the smoothing capacitor,
**characterized in that**:
the generator is an induction generator;
the second power converter is configured to drive an electric motor (15) for driving the railway vehicle; the railway vehicle traction system being configured to, when the contactor is closed, the smoothing capacitor is charged by the storage battery means; when the voltage of the smoothing capacitor reaches or becomes higher than a voltage sufficient to excite the induction generator, the contactor is opened and insulation between the storage battery means and the smoothing capacitor is ensured; supply a current to the induction generator in order to start an operation of generating power using power charged in the smoothing capacitor after the contactor is opened; and
the on-vehicle control device includes at least any of a control circuit for the first power converter, a control circuit for the second power converter, an on-vehicle signal device, a driver's board, a central control unit for communicating with devices within the railway vehicle and a brake control device.

2. The railway vehicle traction system according to claim 1, further comprising:
a third power converter (9) that is connected between the smoothing capacitor and the storage battery means, the converter configured to convert a voltage of the storage battery means into an alternating-current voltage;
a transformer (10) configured to receive the alternating-current voltage from the third power converter on a primary side; and
a rectifier (8) configured to rectify an alternating-current voltage of the transformer on a secondary side and supply the alternating-current voltage to the smoothing capacitor,
wherein the smoothing capacitor is configured to be charged by the storage battery means through the third power converter, the transformer, and the rectifier.

3. The railway vehicle traction system according to claim 2,
wherein the number of turns of a coil on the secondary side is larger than that on the primary side in the transformer.

4. The railway vehicle traction system according to claim 2 or 3,
wherein the engine is configured to be activated by causing the first power converter to drive the induction generator using the power charged in the smoothing capacitor.

5. The railway vehicle traction system according to claim 1, further comprising:
a third power converter (9) configured to convert a voltage of the storage battery means into an alternating-current voltage; and
a transformer (10) configured to receive the alternating-current voltage output from the third power converter on a primary side,
wherein a secondary-side output of the transformer is connected to an alternating-current input end of the first converter, an alternating-current voltage output from the transformer is configured to be rectified by the first power converter, and the smoothing capacitor is configured to be charged by the storage battery means.

6. The railway vehicle traction system according to claim 5,
wherein the number of turns of a coil on the secondary side is larger than that on the primary side in the transformer.

7. The railway vehicle traction system according to claim 5 or 6,
wherein the engine is configured to be activated by causing the first power converter to drive the induction generator using the power charged in the smoothing capacitor.

8. A railway vehicle having the traction system according to any one of the previous claims.

## Patentansprüche

1. Schienenfahrzeugantriebssystem, umfassend:
einen Motor (1);
einen Generator (2), der zum Antreiben des Motors konfiguriert ist;
einen ersten Leistungswandler (3), der konfiguriert ist, die aus dem Generator ausgegebene Wechselstromausgangsleistung in Gleichstromleistung umzuwandeln;
einen Glättungskondensator (5), der konfiguriert ist, die aus dem ersten Leistungswandler ausgegebene Gleichstromausgangsleistung zu glätten;
einen zweiten Leistungswandler (4), der konfiguriert ist, die aus dem Glättungskondensator, der als eine Gleichspannungsquelle dient, ausgegebene Gleichstromausgangsleistung in Wechselstromleistung umzuwandeln;
ein Akkumulatormittel (6), um einer fahrzeuginternen Steuervorrichtung Leistung zuzuführen; und
ein Schütz (7), das zwischen dem Akkumulatormittel und dem Glättungskondensator verbunden ist,
**dadurch gekennzeichnet,**
**dass** der Generator ein Induktionsgenerator ist;
**dass** der zweite Leistungswandler konfiguriert ist, einen Elektromotor (15) zum Antreiben des Schienenfahrzeugs anzusteuern;
**dass** das Schienenfahrzeugantriebssystem konfiguriert ist, wenn das Schütz geschlossen ist, dass der Glättungskondensator durch das Akkumulatormittel aufgeladen wird; wenn die Spannung des Glättungskondensators eine Spannung, die ausreicht, den Induktionsgenerator zu erregen, erreicht oder höher als diese wird, das Schütz geöffnet wird und Isolierung zwischen dem Akkumulatormittel und dem Glättungskondensator gewährleistet ist;
**dass** dem Induktionsgenerator ein Strom zugeführt wird, um einen Leistungserzeugungsbetrieb durch Verwendung von Leistung, die im Glättungskondensator, nachdem das Schütz geöffnet worden ist, geladen ist, zu starten; und
**dass** die fahrzeuginterne Steuervorrichtung zumindest eine aus einer Steuerschaltung für den ersten Leistungswandler, einer Steuerschaltung für den zweiten Leistungswandler, einer fahrzeuginternen Signalvorrichtung, eines Triebfahrzeugführerschaltbretts, einer Zentralsteuerungseinheit zur Kommunikation mit Vorrichtungen innerhalb des Schienenfahrzeugs und einer Bremssteuervorrichtung umfasst.

2. Schienenfahrzeugantriebssystem gemäß Anspruch 1, ferner umfassend:
einen dritten Leistungswandler (9), der zwischen dem Glättungskondensator und dem Akkumulatormittel verbunden ist, wobei der Wandler konfiguriert ist, eine Spannung des Akkumulatormittels in eine Wechselstromspannung umzuwandeln;
einen Transformator (10), der konfiguriert ist, die Wechselstromspannung aus dem dritten Leistungswandler auf einer Primärseite aufzunehmen;
einen Gleichrichter (8), der konfiguriert ist, eine Wechselstromspannung des Transformators auf einer Sekundärseite gleichzurichten und die Wechselstromspannung dem Glättungskondensator zuzuführen,
wobei der Glättungskondensator konfiguriert ist, durch das Akkumulatormittel durch den dritten Leistungswandler, den Transformator und den Gleichrichter aufgeladen zu werden.

3. Schienenfahrzeugantriebssystem gemäß Anspruch 2,
wobei die Anzahl von Windungen einer Spule auf der Sekundärseite größer als auf der Primärseite im Transformator ist.

4. Schienenfahrzeugantriebssystem gemäß Anspruch 2 oder 3,
wobei der Motor konfiguriert ist, aktiviert zu werden, indem der erste Leistungswandler veranlasst wird, den Induktionsgenerator durch Verwendung der im Glättungskondensator geladenen Leistung anzutreiben.

5. Schienenfahrzeugantriebssystem gemäß Anspruch 1, ferner umfassend:
einen dritten Leistungswandler (9), der konfiguriert ist, eine Spannung des Akkumulatormittels in eine Wechselstromspannung umzuwandeln; und
einen Transformator (10), der konfiguriert ist, die aus dem dritten Leistungswandler ausgegebene Wechselstromspannungsausgangsleistung auf einer Primärseite aufzunehmen,
wobei eine Sekundärseiten-Ausgangsleistung des Transformators mit einem Wechselstromeingangsende des ersten Wandlers verbunden ist, eine aus dem Transformator ausgegebene Wechselstromspannungsausgangsleistung konfiguriert ist, durch den ersten Leistungswandler gleichgerichtet zu sein, und der Glättungskondensator konfiguriert ist, durch das Akkumulatormittel aufgeladen zu werden.

6. Schienenfahrzeugantriebssystem gemäß Anspruch 5,
wobei die Anzahl von Windungen einer Spule auf der Sekundärseite größer als auf der Primärseite im Transformator ist.

7. Schienenfahrzeugantriebssystem gemäß Anspruch 5 oder 6,
wobei der Motor konfiguriert ist, aktiviert zu werden, indem der erste Leistungswandler veranlasst wird, den Induktionsgenerator durch Verwendung der im Glättungskondensator geladenen Leistung anzutreiben.

8. Schienenfahrzeug, welches das Antriebssystem gemäß einem der vorangegangenen Ansprüche aufweist.

## Revendications

1. Système de traction de véhicule ferroviaire comprenant :
un moteur (1) ;
un générateur (2) configuré pour être entraîné par le moteur ;
un premier convertisseur de puissance (3) configuré pour convertir la puissance de sortie de courant alternatif du générateur en courant continu ;
un condensateur de lissage (5) configuré pour lisser la sortie de courant continu provenant du premier convertisseur de puissance ;
un deuxième convertisseur de puissance (4) configuré pour convertir la puissance de sortie de courant continu provenant du condensateur de lissage servant de source de tension de courant continu en énergie de courant alternatif ;
des moyens de batterie de stockage (6) pour fournir de l'énergie à un dispositif de commande embarqué ; et
un contacteur (7) qui est connecté entre les moyens de batterie de stockage et le condensateur de lissage,
**caractérisé en ce que** :
le générateur est un générateur asynchrone ;
le deuxième convertisseur de puissance est configuré pour entraîner un moteur électrique (15) afin d'entraîner le véhicule ferroviaire ;
le système de traction de véhicule ferroviaire étant configuré pour, lorsque le contacteur est fermé et le condensateur de lissage est chargé par les moyens de batterie de stockage ; lorsque la tension du condensateur de lissage atteint ou devient supérieure à une tension suffisante pour exciter le générateur asynchrone, le contacteur est ouvert et l'isolation entre les moyens de batterie de stockage et le condensateur de lissage est assurée ;
fournir un courant au générateur asynchrone afin de démarrer une opération de production d'énergie en utilisant la puissance chargée dans le condensateur de lissage après l'ouverture du contacteur ; et
le dispositif de commande embarqué comprend au moins un quelconque parmi un circuit de commande pour le premier convertisseur de puissance, un circuit de commande pour le deuxième convertisseur de puissance, un dispositif de signalisation embarqué, une carte de conducteur, une unité de commande centrale pour communiquer avec des dispositifs à l'intérieur du véhicule ferroviaire et un dispositif de commande de frein.

2. Système de traction de véhicule ferroviaire selon la revendication 1, comprenant en outre :
un troisième convertisseur de puissance (9) qui est connecté entre le condensateur de lissage et les moyens de batterie de stockage, le convertisseur étant configuré pour convertir une tension des moyens de batterie de stockage en une tension de courant alternatif ;
un transformateur (10) configuré pour recevoir la tension de courant alternatif provenant du troisième convertisseur de puissance sur un côté primaire ; et
un redresseur (8) configuré pour redresser une tension de courant alternatif du transformateur sur un côté secondaire et fournir la tension de courant alternatif au condensateur de lissage,
dans lequel le condensateur de lissage est configuré pour être chargé par les moyens de batterie de stockage à travers le troisième convertisseur de puissance, le transformateur et le redresseur.

3. Système de traction de véhicule ferroviaire selon la revendication 2,
dans lequel le nombre de spires d'une bobine du côté secondaire est plus grand que celui du côté primaire dans le transformateur.

4. Système de traction du véhicule ferroviaire selon 2 ou 3,
dans lequel le moteur est configuré pour être activé en amenant le premier convertisseur à entraîner le générateur d'induction en utilisant le condensateur chargé dans le condensateur de lissage.

5. Système de traction de véhicule ferroviaire selon la revendication 1, comprenant en outre :
un troisième convertisseur de puissance (9) configuré pour convertir une tension des moyens de batterie de stockage en une tension de courant alternatif ; et
un transformateur (10) configuré pour recevoir la sortie de tension de courant alternatif provenant du troisième convertisseur de puissance sur un côté primaire,
dans lequel une sortie de côté secondaire du transformateur est connectée à une extrémité d'entrée à courant alternatif du premier convertisseur, une sortie de tension de courant alternatif provenant du transformateur est configurée pour être redressée par le premier convertisseur de puissance,
et le condensateur de lissage est configuré pour être chargé par les moyens de batterie de stockage.

6. Système de traction de véhicule ferroviaire selon la revendication 5,
dans lequel le nombre de spires d'une bobine du côté secondaire est plus grand que celui du côté primaire dans le transformateur.

7. Système de traction de véhicule ferroviaire selon la revendication 5 ou 6,
dans lequel le moteur est configuré pour être activé en amenant le premier convertisseur de puissance à entraîner le générateur asynchrone en utilisant la puissance chargée dans le condensateur de lissage.

8. Véhicule ferroviaire ayant le système de traction selon l'une quelconque des revendications précédentes.
